(19) Europäisches Patentamt
European Patent Office
Office européen des brevets

(11) **EP 3 854 674 B1**

(12) **EUROPEAN PATENT SPECIFICATION**

(45) Date of publication and mention
of the grant of the patent:
**18.05.2022 Bulletin 2022/20**

(21) Application number: **18941091.3**

(22) Date of filing: **20.11.2018**

(51) International Patent Classification (IPC):
*F16J 15/00* (2006.01)          *G06F 7/544* (2006.01)
*B63H 23/32* (2006.01)          *F16J 15/3296* (2016.01)
*G01C 13/00* (2006.01)          *B63B 39/12* (2006.01)
*B63B 79/10* (2020.01)

(52) Cooperative Patent Classification (CPC):
**B63B 79/10; B63B 39/12; F16J 15/002;**
**F16J 15/3296; G06F 7/544;** B63H 2023/327;
Y02T 70/10

(86) International application number:
**PCT/JP2018/042772**

(87) International publication number:
**WO 2020/105105 (28.05.2020 Gazette 2020/22)**

(54) **DRAUGHT METER AND VESSEL**

TIEFGANGSMESSER UND SCHIFF

APPAREIL DE MESURE DE TIRANT D'EAU ET NAVIRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**28.07.2021 Bulletin 2021/30**

(73) Proprietor: **Wartsila Japan Ltd.**
**Hyogo 650-0045 (JP)**

(72) Inventor: **OKAMOTO, Mitsuhiro**
**Toyama-shi, Toyama 930-0916 (JP)**

(74) Representative: **TBK**
**Bavariaring 4-6**
**80336 München (DE)**

(56) References cited:
JP-A- 2015 514 041          JP-U- H0 662 267
JP-U- S4 899 167            JP-U- S5 679 808
KR-A- 20040 101 836         SE-C2- 509 843
US-A- 5 643 026             US-A- 5 683 278

**Description**

[Technical Field]

The present invention relates to a draft meter and a vessel.

[Background Art]

In recent years, the implementation of the Internet of Things (IoT) in vessels is becoming more widespread. Big data obtained by various types of sensors and so on that are installed in a vessel is proving to be useful for making improvements to various types of devices included in the vessel and also for increasing vessel operational efficiency. However, in certain use-cases, IoT implementation has proven to be difficult, one such use-case being the draft of a vessel. The main factor hindering implementation of IoT is that it is difficult to identify draft in real-time because the draft is constantly fluctuating during the loading and unloading of cargo while the vessel is stationary and during vessel navigation at sea, for example.
In one example of a conventional method for identifying the draft of a vessel, marks are provided in advance on the outer plating on the sides of the vessel, and measurement is performed by a person in charge of measuring, known as a measurer, who boards a small boat and rides up close to the anchored vessel. There, the measurer uses a draft measuring device to measure the distance between a mark and the waterline (see PLT 1, for example).
US 5 683 278 A discloses a system to seal a ship's propeller shaft against the outside water and against a lubrication chamber wherein the pressure of the lubricant is adjusted according to signals of a draft measurement system.

[Citation List]

[Patent Literature]

[PLT 1] Japanese Laid-open Patent Publication No. 2014-196067

[Summary of Invention]

[Technical Problem]

However, it is time-consuming and laborious to identify the draft using the draft identifying method described in Patent document 1 because the method involves a measurer boarding a small boat, riding up close to the anchored vessel, and performing a measurement using a draft measuring device. Moreover, it is difficult to identify, at a freely-selected timing, the draft which could be constantly fluctuating, and consequently, time-series data regarding draft for use in conjunction with the implementation of IoT in vessels cannot be accumulated.
Therefore, an objective of the present disclosure it to provide a draft meter and a vessel that are capable of identifying, at a freely-selected timing, the draft which could be constantly fluctuating.

[Solution to Problem]

According to one aspect of the present disclosure, a draft meter to be used for a vessel in which a plurality of seal rings are arranged around a propeller shaft at intervals in an axial direction of the propeller shaft, an air chamber and an oil chamber in this order from a stern side are provided by the plurality of seal rings, and an air control unit is connected to the air chamber via an air supply channel, and having a pressure gauge for measuring pressure in the air chamber, includes:

　　a data storage unit and an arithmetic unit,
　　wherein the data storage unit is configured such that predetermined correction data and predetermined seawater density data are stored and that pressure data measured by the pressure gauge is received, and
　　wherein the arithmetic unit is configured to identify a draft of the vessel by calculating a difference value between the pressure data and the correction data and by dividing the difference value by the seawater density data.

The invention is defined by the appended claims.

[Advantageous Effects of Invention]

According to an aspect of the present disclosure, the draft, which could be constantly fluctuating, can be identified at a freely-selected timing.

[Brief Description of Drawings]

[FIG. 1]

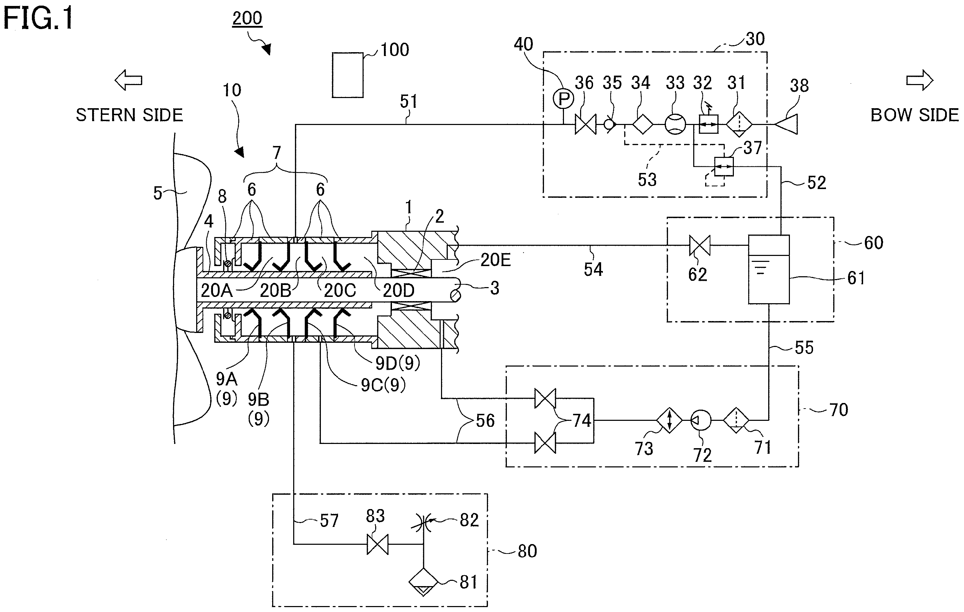

FIG. 1 is a diagram illustrating an example of a system configuration of a vessel according to an embodiment;
[FIG. 2]

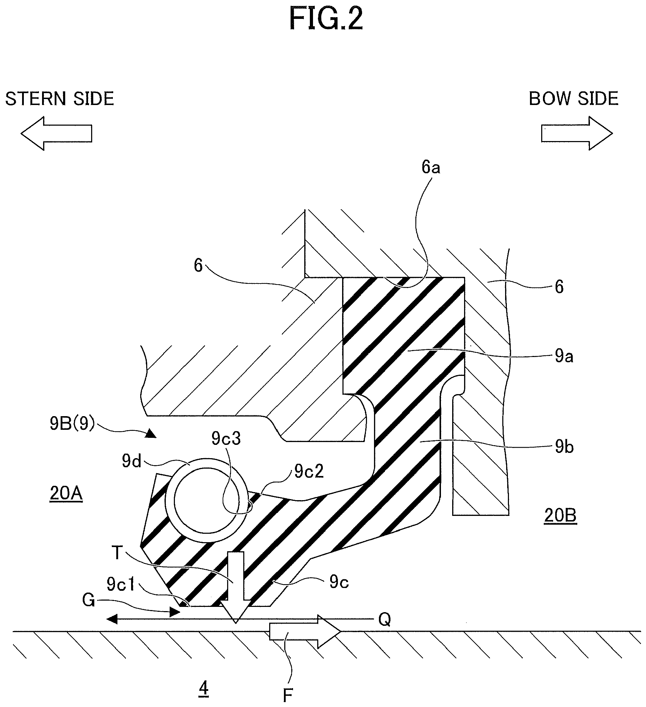

FIG. 2 is a diagram for describing a configuration of a seal ring and for describing tensional force and channel resistance;
[FIG. 3]

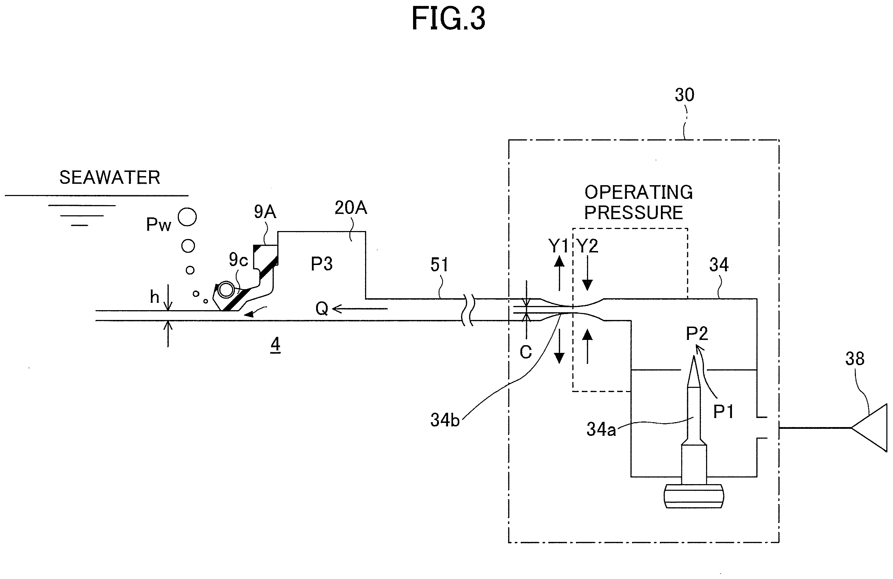

FIG. 3 is a diagram for describing a pressure following operation caused by a flow controller included in an air controlling unit;
[FIG. 4]

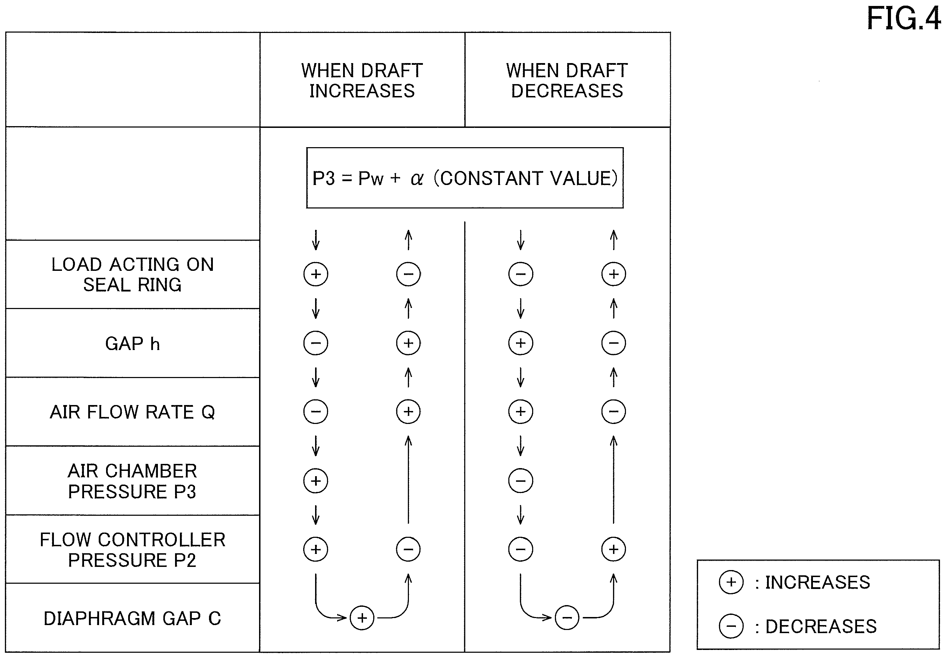

FIG. 4 is a diagram for describing a control mechanism of air chamber pressure caused by the flow controller in a case where the draft increases, and in a case where the draft decreases;
[FIG. 5]

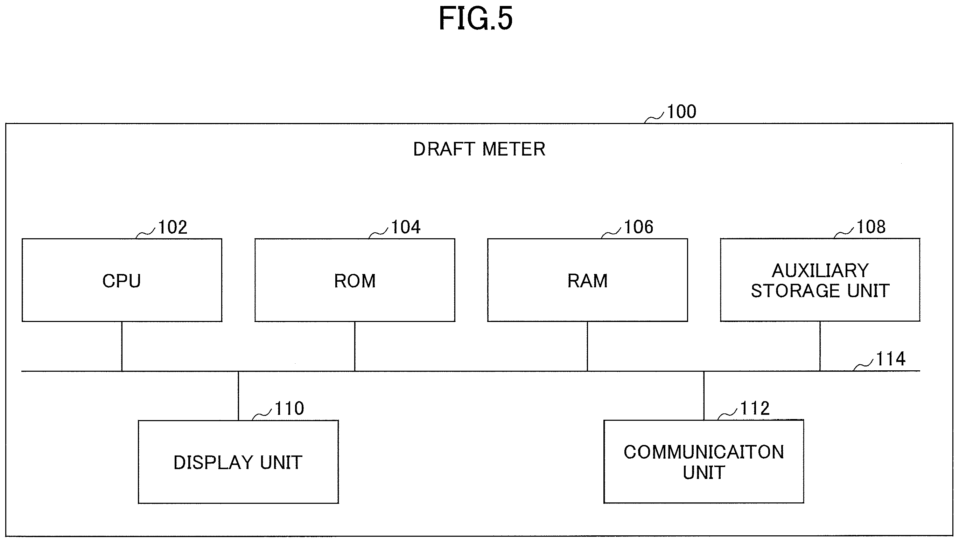

FIG. 5 is a diagram illustrating an example of a hardware configuration of the draft meter according to the embodiment;
[FIG. 6]

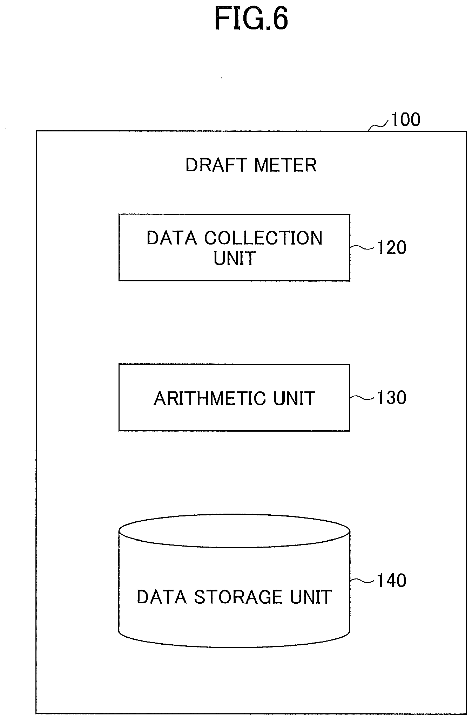

FIG. 6 is a diagram illustrating an example of a functional configuration of the draft meter according to the embodiment;
[FIG. 7]

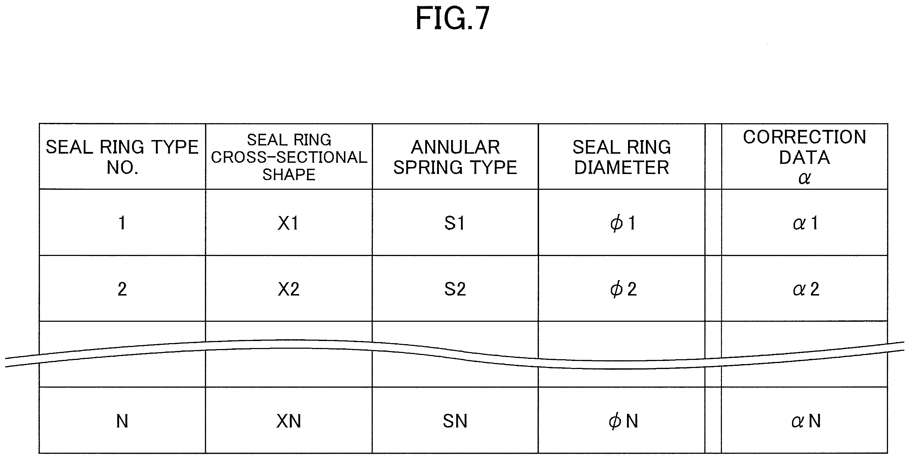

Fig. 7 is a diagram illustrating an example of correction data to be stored in a data storage unit of the draft meter; and
[FIG. 8]

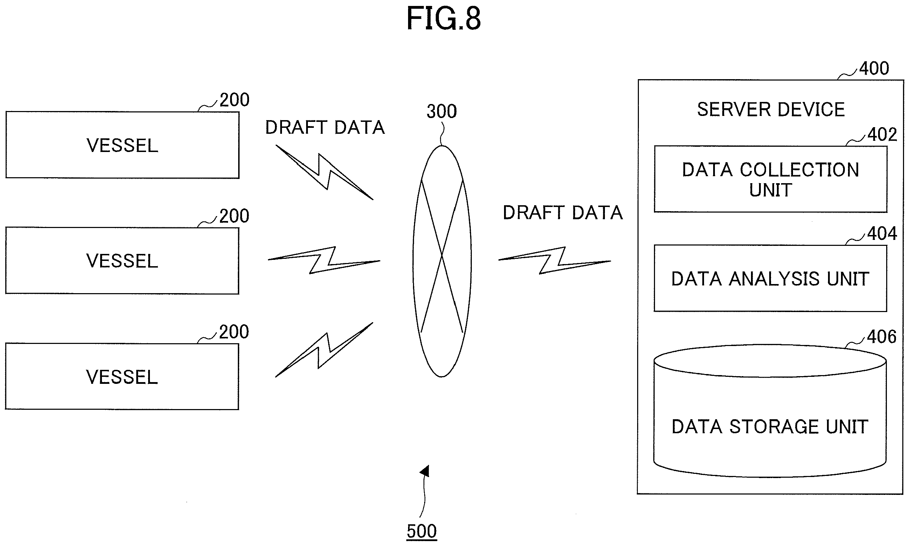

FIG. 8 is a diagram illustrating an example of an overall configuration of a draft data collection system and an example of a functional configuration of a server device.

[Description of Embodiments]

Hereinafter, a draft meter and a vessel according to an embodiment of the present disclosure are described with reference to the appended drawings. Furthermore, a draft data collection system including a server device that accumulates draft data to be transmitted from the draft meter are described with reference to the appended drawings. Constituent elements that are substantially the same are denoted with the same reference numerals and thus redundant descriptions may be omitted in this specification and in the drawings.

[Vessel according to an embodiment]

First, a vessel according to the embodiment is described with reference to FIG. 1 to FIG. 4. Here, FIG. 1 is a diagram illustrating an example of a system configuration of the vessel according to the embodiment. FIG. 2 is a diagram for describing a configuration of a seal ring and for describing tensional force and channel resistance.

As illustrated in FIG. 1, a vessel 200 includes a stern tube sealing device 10 around a propeller shaft 3, and mainly includes as onboard devices, an air control unit 30, an oil tank unit 60, an oil pump unit 70, a drain recovery unit 80, and a draft meter 100.

A stern tube 1 is equipped with a bearing 2, the propeller shaft 3 is rotatably supported via the bearing 2, and a propeller 5 is fixed to the stern-side tip of the propeller shaft 3.

A liner 4 is fitted to the periphery of the propeller shaft 3, a housing 7 tubular in shape and concentrically surrounding the liner 4 is disposed on the outer periphery of the liner 4, and the housing 7 is fixed to the stern tube 1 by bolts. The stern tube sealing device 10 includes the housing 7, a packing ring 8, and four seal rings 9 (a first seal ring 9A, a second seal ring 9B, a third seal ring 9C, and a fourth seal ring 9D, in this order from the stern side).

The housing 7 is formed by six split housings 6 and all of the split housings 6 are cylindrical members. The housing 7 is attached to the stern tube 1 in a state in which the split housings 6 are engaging one another and are stacked in the axial direction of the propeller shaft 3. Upon fitting together all the split housings 6 that are disposed adjacent to each other among the split housings 6, an annular groove 6a is formed as illustrated in FIG. 2, and the seal rings 9 are held in place by the annular groove 6a. The packing ring 8 is formed of an O-ring elastic member, and is fitted to the exterior of the liner 4. The packing ring 8 rotates together with the liner 4 in sliding contact with the housing 7, thereby preventing foreign matter such as fishing nets and the like from entering the stern tube sealing device 10 and the stern tube 1.

As illustrated in FIG. 2, the seal ring 9 includes a key portion 9a, an arm portion 9b, and a lip portion 9c. The key portion 9a is formed on the outer peripheral-side end of the seal ring 9 and is engagingly held in place by the annular groove 6a. The arm portion 9b is formed so as to extend from the key portion 9a toward the liner 4, and then bend away toward the stern. Although it is evident from the second seal ring 9B illustrated in FIG. 2 that the key portion 9a bends and extends toward the stern, the respective key portions 9a of the third seal ring 9C and the fourth seal ring 9D oppositely bend toward the bow. The lip portion 9c is formed on the inner peripheral-side end of the arm portion 9b and a first side surface 9c1 thereof faces the liner 4. In contrast to this, a spring groove 9c3 of the lip portion 9c is situated in a second side surface 9c2 on a side opposite to the liner 4, and the second seal ring 9B is pulled tightly toward the liner 4 by an annular spring 9d fitted in the spring groove 9c3.

In this way, the tightening force by the seal ring 9 that is annular in shape and the tightening force by the annular spring 9d that is annular in shape cause a tensional force T to act on the seal ring 9 in the radial direction toward the liner 4.

Conversely, as described further below, when air at a constant flow rate Q flows toward the stern through a small gap G between the first side surface 9c1 of the lip portion 9c and the liner 4, a channel resistance F from the stern side acts on this air.

Examples of the forming material of the seal ring 9 that is an elastic member include rubber materials and resin materials other than rubber. Examples of the rubber materials include nitrile rubber (NBR), fluororubber (FR), natural rubber (NR), isoprene rubber (IR), butadiene rubber (BR), styrenebutadiene rubber (SBR), and the like. Conversely, examples of resin materials other than rubber include polytetrafluoroethylene (PTFE), polyetheretherketone (PEEK), fluororesin, polyamide (PA), and the like.

The first seal ring 9A and the second seal ring 9B are disposed such that the respective lip portions face in the direction of the stern whereas the third seal ring 9C and the fourth seal ring 9D are disposed such that the respective lip portions face in the direction of the bow. Also, a ring chamber is formed between each of the mutually adjacent seal rings 9, 9. Namely, a first air chamber 20A, a second air chamber 20B (both are examples of an air chamber), and a first oil chamber 20C (an example of an oil chamber) are formed in this order from the stern side). Besides this illustrated example, a stern tube sealing device that has three seal rings 9 may alternatively be used, and in this variation, the first seal ring from the stern side is disposed such that the lip portion faces in the direction of the stern, whereas the second and third seal rings are disposed such that the respective lip portions face in the direction of the bow.

An air supply channel 51 runs from an air control unit 30 to the second air chamber 20B, and air that is provided from an air source 38 is supplied to the second air chamber 20B via the air control unit 30 and subsequently via the air supply channel 51. Then, this supplying of the air causes the respective lip portions of the second seal ring 9B and the first seal ring 9A to lift up in turn, thereby discharging the air into the sea water.

In contrast to this, an oil supply channel 56 runs to the first oil chamber 20C, and lubricating oil supplied from an oil tank unit 60 is supplied to an oil pump unit 70 via an oil supply channel 55, and then the lubricating oil is supplied from the oil pump unit 70 to the first oil chamber 20C via the oil supply channel 56.

On the downstream side of the oil pump unit 70, the oil supply channel 56 divides into two oil supply channels 56 such that lubricating oil is supplied to the first oil chamber 20C via one of the two oil supply channels 56 and lubricating oil is supplied to a third oil chamber 20E via the other one of the two oil supply channels 56. This lubricating oil makes the sliding of the bearing 2 good. The lubricating oil provided to the third oil chamber 20E is supplied to a second oil chamber 20D that is a ring-shaped chamber formed between the bearing 2 and the fourth seal ring 9D on the stern side of the bearing 2. An oil return channel 54 runs to the third oil chamber 20E and the lubricating oil is returned to the oil tank unit 60 via the oil return channel 54.

The air control unit 30 includes, in order from the air source 38 toward the second air chamber 20B, a filter 31, a regulator 32, a flowmeter 33, a flow controller 34, a check valve 35, and a valve 36 that is regularly open. With the regulator 32, pressure control is executed to the extent that the air pressure of the air (compressed air) that is supplied to the second air chamber 20B does not get excessively high.

Also, with the flow controller 34, a constant amount of air, whose flow rate is adjusted in response to fluctuations in the seawater pressure, is supplied such that a constant difference in pressure is maintained between the second air chamber 20B and the seawater pressure that is always fluctuating. This type of control ensures that the respective air chamber pressures of the first air chamber 20A and the second air chamber 20B are always higher than the seawater pressure by a certain amount, and prevents an ingress of seawater by ultimately exhausting the air from the stern side.

Also, on the downstream side of the regulator 32, the air control unit 30 is connected to an oil tank 61 included in the oil tank unit 60, via a pressurization channel 52. In the air control unit 30, an air relay (pressure adjusting valve) 37 is provided at a location partway along the pressurization channel 52, and a pressure input signal channel 53 is drawn out from a location further downstream than the pressurization channel connection point on the air supply channel 51 and connected to the air relay 37. With the air relay 37, the chamber pressure of the oil tank 61 is controlled to be slightly higher than that of the air supply channel 51 (in other words, control is performed such that the oil chamber pressure of the first oil chamber 20C is slightly higher than the air chamber pressure of the second air chamber 20B), thereby preventing foreign matter from getting mixed into that of the first oil chamber 20C.

The oil tank unit 60 includes the oil tank 61 and a valve 62 that is regularly open and exists at a location partway along the oil return channel 54. The pressure of the air provided to the oil tank 61 via the pressurization channel 52 is utilized to pressurize the oil tank 61, thereby controlling the oil pressure in the first oil chamber 20C through to the third oil chamber 20E so as to always be higher in pressure by a constant amount than the seawater pressure and the air chamber pressure of the first air chamber 20A and the second air chamber 20B. By performing control such that the oil chamber pressure of the first oil chamber 20C is always higher in pressure by a constant amount than the air chamber pressure of the second air chamber 20B and by orienting the lip portion of the third seal ring 9C in the direction of the bow, the lubricating oil of the first oil chamber 20C can causes the lip portion of the third seal ring 9C to constantly press against the liner 4. By doing so, the lip portion of the third seal ring 9C is constantly in sliding contact with the liner 4, thereby preventing lubricating oil from leaking from the first oil chamber 20C to the second air chamber 20B.

The oil pump unit 70 includes, in order from the side where the oil tank 61 is, a filter 71, a circulation pump 72, a cooler 73, and valves 74 that are regularly open and are located where the oil supply channel 56 extending from the cooler 73 divides. The oil pump unit 70 supplies lubricating oil supplied from oil tank unit 60 to the first oil chamber 20C and the third oil chamber 20E, and supplies lubricating oil to the second oil chamber 20D via sliding surface between the liner 4 and the third seal ring 9C and the sliding surface between the liner 4 and the fourth seal ring 9D. Thereafter, the lubricating oil is returned from the third oil chamber 20E to the oil tank unit 60 via the oil return channel 54, such that the lubricating oil is constantly circulating.

The drain recovery unit 80 includes a drain channel 57 communicating with the second air chamber 20B and includes a valve 83 that is regularly open and is at a location partway along the drain channel 57, so that when seawater or lubricating oil ingresses into the second air chamber 20B, these fluids are discharged. The drain recovery unit 80 further includes a drain discharge device 81 (auto drain) and a needle valve 82 so that any seawater, lubricating oil, and the like is recovered by the drain discharge device 81 and automatically discharged by the drain discharge device 81 once a certain amount has been accumulated.

With the drain recovery unit 80, normally, only air from the second air chamber 20B is released. However, in the unlikely event that seawater or lubricating oil leaks into the second air chamber 20B, any leaked-in seawater or lubricating oil is collected by the drain recovery unit 80 as a small amount of pressurized air is discharged via the needle valve 82 that is constantly open.

Moreover, as illustrated in FIG. 1, the vessel 200 includes a pressure gauge 40 in the air supply channel 51. Although the illustrated example is an embodiment in which the pressure gauge 40 is provided in the air supply channel 51 inside the air control unit 30, the pressure gauge 40 may instead be provided, for example, in proximity to the entrance of the second air chamber 20B of the air supply channel 51, or the pressure gauge 40 may instead be provided inside the second air chamber 20B or inside the first air chamber 20A.

The pressure gauge 40 of the vessel 200 is constantly measuring the pressure within the air chambers, namely the second air chamber 20B and the first air chamber 20A.

Furthermore, as illustrated in FIG. 1, the vessel 200 includes a draft meter 100. Although described further below, the configuration is such that pressure data of the air chambers which are constantly being measured is transmitted to the draft meter 100 and the draft is identified by the draft meter 100 based on this pressure data.

Next, the pressure following operation in response to fluctuations in seawater pressure performed by the air control unit is described with reference to FIG. 3 and FIG. 4. Here, FIG. 3 is diagram for describing the pressure following operation performed by the flow controller included in the air control unit. Also, FIG. 4 is a diagram for describing the control mechanism of the air chamber pressure performed by the flow controller, in a case where the draft rises, and in a case where the draft lowers.

The flow controller 34 includes a needle valve 34a and a diaphragm 34b and is configured to increase the gap C of the diaphragm 34b in the Y1 directions or decrease this gap C in the Y2 directions through operating pressure. The flow controller 34 includes a function for, upon stabilizing the air pressure P1 at the entrance side into which air is provided from the air source 38, working to maintain the same air flow rate Q even when the air pressure P2 on the exit side changes.

In contrast to this, in the seal ring 9A, as long as there is no change in the flow rate Q of the air passing through the gap h between the lip portion 9C and the liner 4, the gap h is substantially the same, and the pressure difference (P3 - Pw) between the air pressure P3 of the first air chamber 20A on the back-face side and the seawater pressure Pw on the front-face side is kept substantially constant.

Here, as illustrated in FIG. 4, in a case where, for example, the draft increases and the seawater pressure Pw increases, the load acting on the seal ring 9A increases first and then the gap h between the seal ring 9A and the liner 4 decreases in an instant. Therefore, the air flow rate Q decreases causing the air chamber pressure P3 and the exit pressure P2 of the flow controller 34 to increase.

At this time, the flow controller 34, which is to maintain a constant flow rate, rapidly widens the gap C of the diaphragm 34b, causing the exit pressure P2 and the air flow rate Q to return to the previous values. The returning of the air flow rate Q to the previous value also causes the pressure difference (P3 - Pw) between the front-face and back-face sides of the seal ring 9A to return to the initial value, thereby causing the air chamber pressure P3 to follow with an increase of the seawater pressure Pw. The pressure following operation by the air control unit 30 in the case when the draft increases can be performed without any time delays.

Such a pressure following operation by the air control unit 30 is performed in substantially the same manner also in a case when the draft decreases and the seawater pressure Pw decreases. In this case as well, the pressure following operation by the air control unit 30 can be performed without any time delays.

As described above, since control is performed by the flow controller 34 such that the air flow rate Q provided to the air chamber is constant to handle fluctuations in the draft, a stable channel can be maintained between the seal ring 9 and the liner 4 irrespective of the fluctuations in the draft (fluctuations in seawater pressure). Therefore, the channel resistance F illustrated in FIG. 2 is substantially constant.

In contrast to this, as illustrated in FIG. 2, tensional force T is constantly acting on the seal ring 9. Tensional force T, as described below, can vary appreciably depending on the type of seal ring used. For example, the cross-sectional shape of the seal ring, the materials, the type of the annular spring, the seal ring diameter, and the like are elements that define the type of seal ring, and tensional force T according to the type of seal ring exists. Also, the channel resistance can also change when the cross-sectional shape of the seal ring is changed, for example.

However, it is exceptionally difficult to separately identify the tensional force T and the channel resistance F. To resolve this, in a laboratory, a stern tube sealing device utilizing a type of seal ring to be used is produced, seawater on one side of the seal ring is simulated, an air chamber is provided on the other side of the seal ring, and air is provided by a flow controller such that the air flow rate is constant. Equation (1) is derived from measuring the seawater pressure Pw and the air chamber pressure P3, after having secured a stable channel, and then obtaining a relational expression between the two.

(Equation 1)

$$\text{Air chamber pressure } (P3) = \text{Seawater pressure } (Pw) + \alpha \text{ (Constant value)} \quad \cdots\cdots (1)$$

In Equation (1), given that the correction value $\alpha$ is a total value of the tensional force T dependent on the type of seal ring used and the channel resistance F that can be made substantially constant as described above, $\alpha$ can be treated as a constant value by setting the type of seal ring, and thus the Equation (1) can be derived.

The inventors of the present disclosure have thus far performed laboratory experiments using multiple types of seal rings and have identified that the range of $\alpha$ is a range from 0.01 MPa to 0.03 MPa. From this, a value of, for example, 0.015 MPa can be applied, which is within the previously-described range numerical range, to $\alpha$ in accordance with the seal ring type to be used.

As already described, in the vessel 200, seawater pressure (Pw) can be identified, based on the measurements of the air chamber pressure (P3) constantly performed by the pressure gauge 40, by using the air chamber pressure (P3) with the following Equation (2) obtained by modifying aforementioned Equation (1).

(Equation 2)

$$\text{Seawater pressure } (Pw) = \text{Air chamber pressure } (P3) - \alpha \text{ (Constant value)} \quad \cdots\cdots (2)$$

It is to be noted that the seawater density can be identified as being, for example, $1.025 \times 10^{-3} \text{ kg/cm}^3$ although there may be minor fluctuations due to the seawater temperature and the like.

Therefore, the draft can be identified by using the air chamber pressure (P3) with the following Equation (3) using the identified seawater pressure (Pw) in the aforementioned Equation (2) and the aforementioned seawater density.

(Equation 3)

$$\text{Draft} = \left\{ \text{Air chamber pressure } (P3) - \alpha \text{ (Constant value)} \right\} \Big/ \text{Seawater density} \quad \cdots\cdots (3)$$

As described below, the draft meter 100 in the vessel 200 can identify the draft based on the pressure data regarding air chamber pressure measured by the pressure gauge 40. Therefore, the draft, which could be constantly fluctuating, can be identified at a freely-selected timing, and time-series data regarding draft for use in conjunction with the implementation of IoT in vessels can be accumulated.

Draft Meter according to the Embodiment

Next, the draft meter according to the embodiment is described with reference to FIG. 5 to FIG. 7. Here, FIG. 5 is a diagram illustrating an example of a hardware configuration of the draft meter according to the embodiment, whereas FIG. 6 is a diagram illustrating an example of a functional configuration of the draft meter according to the embodiment. Also, FIG. 7 is a diagram illustrating an example of correction data to be stored in a data storage unit of the draft meter.

As illustrated in FIG. 5, the draft meter 100 includes a central processing unit (CPU) 102, a read-only memory (ROM) 104, a random-access memory (RAM) 106, an auxiliary storage unit 108, a display unit 110, and a communication unit 112. Each of the components of the draft meter 100 is connected to one another via a bus 114.

The CPU 102 executes various types of programs installed in the auxiliary storage unit 108. The ROM 104 is non-volatile memory and serves as a main storage unit that stores various types of programs, data, and the like necessary for the CPU 102 to execute the various types of programs stored in the auxiliary storage unit 108. The RAM 106 is volatile memory and serves as a main storage unit. The RAM 106 serves as a working area for when the various types of programs stored in the auxiliary storage unit 108 are to be executed by the CPU 102. The auxiliary storage unit 108 stores various types of programs installed in the draft meter 100 as well as data and the like to be used when executing the various programs.

The display unit 110 displays draft, which could be fluctuating any time, as the fluctuations occur and displays, for example, a time-series graph of the changes in the draft. Also displayed are the air chamber pressure, the $\alpha$ value, the seawater density, and the like that are the reasons for the changes in draft.

The communication unit 112 transmits the identified draft data to a server device or the like via a network.

As illustrated in FIG. 6, in the draft meter 100, a data collection unit 120 receives pressure data regarding the air chamber pressure measured by the pressure gauge 40. The received pressure data is temporarily stored by the data collection unit 120 into the data storage unit 140.

In the data storage unit 140, predetermined correction data and predetermined seawater density data are stored. Here, the correction data is described with reference to FIG. 7. The correction data $\alpha$, as already described, is set using the sum value of the tensional force value and the channel resistance value that are defined by the type of seal ring to be applied. However, given that it is exceptionally difficult to separately identify the tensional value and the channel resistance value, a stern tube sealing device utilizing a type of seal ring to be used is produced in a laboratory and then correction data $\alpha$ in accordance with the seal ring to be used is identified in advance.

For example, as illustrated in FIG. 7, a seal ring type No. 1 has a seal ring shape that is X1, an annular spring type that is S1, and a seal ring diameter that is Ø1, and these various elements together with the materials of the seal ring are the elements that define the correction data $\alpha$1. In addition to this, the various elements included in seal ring type No. 2, ..., and seal ring type No. N are the elements that define the correction data $\alpha$2, ..., and $\alpha$N, respectively.

The correction data $\alpha$1, $\alpha$2, ..., and $\alpha$N are identified by performing laboratory experiments using the respective types of seal rings. In a laboratory experiment, seawater on one side of the seal ring is simulated, an air chamber is provided on the other side of the seal ring, and air by a flow controller is provided such that the air flow rate is constant. The correction data $\alpha$ can then be identified by measuring the seawater pressure Pw and the air chamber pressure P3, after having secured a stable channel. The inventors of the present disclosure have thus far performed laboratory experiments using multiple types of seal rings and have identified that the range of $\alpha$ is a range from 0.01 MPa to 0.03 MPa.

The identified correction data $\alpha$ is stored in the data storage unit 140. For example, the aforementioned 0.01 MPa to 0.03 MPa may be stored in the data storage unit 140 as the correction data $\alpha$ and suitable correction data $\alpha$ may be selected from within this range. Also, as an example, 0.015 MPa which is within the range of 0.01 MPa to 0.03 MPa may be set as the correction data $\alpha$, and may be stored in the data storage unit 140.

In an arithmetic unit 130, the draft of the vessel 200 is identified by calculating the difference value between the pressure data P3 and the correction data $\alpha$ read from the data storage unit 140 and dividing the difference value by the seawater density data, using the aforementioned Equation (3). The identified draft data is stored in the data storage unit 140.

Since the draft is constantly fluctuating during the loading and unloading of cargo while the vessel 200 is stationary or during vessel navigation at sea, the draft meter 100 identifies the draft at a freely-selected timing, and, at that timing, stores the identified draft data into the data storage unit 140.

The draft meter 100 can easily identify, at a freely-selected timing, the draft which could be constantly fluctuating, without expending any time or energy, and furthermore, can accumulate time-series data regarding draft for use in conjunction with the implementation of IoT in the vessel 200.

For example, since the potential range of draft is approximately 3 m to 15 m, the Pw is potentially from approximately 0.03 MPa to 0.15 MPa. As a result of calculating P3 - $\alpha$ ($\alpha$ is 0.015 MPa, for example) using the measurement value P3 regarding the air chamber pressure, a Pw that is within a range of approximately 0.03 MPa to 0.15 MPa is approximately identified. Also, by using the relation between the identified seawater Pw (MPa) and 1 kg/cm$^2$ = 0.098

MPa, the seawater density $1.025 \times 10^{-3}$ kg/cm$^3$, and the like, the draft can be accurate identified based on the measurement value P3 regarding the air chamber pressure.

Example of draft data collection system

Next, an example of the draft data collection system is described with reference to FIG. 8. Here, FIG. 8 is a diagram illustrating an example of the overall configuration of the draft data collection system and an example of a functional configuration of a servicer device. Although an illustration of a hardware configuration of the server device is omitted, in principle, a configuration that is substantially the same as the configuration of the draft meter 100 illustrated in FIG. 5 is applied.

As illustrated in FIG. 8, a draft data collection system 500 is a measurement data collection system (also known as a crowdsensing system) that collects, via a network 300, draft data identified in a plurality of the vessels 200, and analyzes the data by using a server device 400.

Each vessel 200 (equipped with the draft meter 100) is connected to the server device 400 via the network 300. Examples of the network 300 include the Internet, a local area network (LAN), and the like.

The server device 400 includes a data collection unit 402, and the draft data transmitted, via the communication unit 112 (see FIG. 5) of the draft meters 100 of the vessels 200, are collected by the data collection unit 402 and stored in a data storage unit 406.

In the data analysis unit 404, various types of analysis are performed using the draft data of the various vessels 200 stored in the data storage unit 406.

For example, the relationship between draft and fuel efficiency can be identified by a data analysis unit 404. In this case, fuel consumption data of the vessel is also transmitted to the server device 400, and in the data analysis unit 404, the correlations between draft and fuel economy are identified, and as a result, draft that ensures excellent fuel efficiency can be calculated.

Although certain embodiments have been described, these embodiments have been presented by way of example only, and are not intended to limit the scope of the present disclosure. Indeed, the embodiments described herein may be embodied in a variety of other forms. With respect to this, modifications can be made without departing from the scope of the present disclosure, and appropriately determined in accordance with the form of application.

[Reference Signs List]

| | |
|---|---|
| 1 | STERN TUBE |
| 2 | BEARING |
| 3 | PROPELLER SHAFT |
| 4 | LINER |
| 5 | PROPELLER |
| 6 | SPLIT HOUSING |
| 7 | HOUSING |
| 8 | PACKING RING |
| 9 | SEAL RING |
| 10 | STERN TUBE SEALING DEVICE |
| 20A | FIRST AIR CHAMBER (AIR CHAMBER) |
| 20B | SECOND AIR CHAMBER (AIR CHAMBER) |
| 20C | FIRST OIL CHAMBER |
| 20D | SECOND OIL CHAMBER |
| 20E | THIRD OIL CHAMBER |
| 30 | AIR CONTROL UNIT |
| 34 | FLOW CONTROLLER |
| 40 | PRESSURE GAUGE |
| 51 | AIR SUPPLY CHANNEL |
| 52 | PRESSURIZATION CHANNEL |
| 54 | OIL RETURN CHANNEL |
| 55, 56 | OIL SUPPLY CHANNEL |
| 57 | DRAIN CHANNEL |
| 60 | OIL TANK UNIT |
| 61 | OIL TANK |

| | |
|---|---|
| 70 | OIL PUMP UNIT |
| 80 | DRAIN RECOVERY UNIT |
| 100 | DRAFT METER |
| 120 | DATA COLLECTION UNIT |
| 130 | ARITHMETIC UNIT |
| 140 | DATA STORAGE UNIT |
| 110 | DISPLAY UNIT |
| 112 | COMMUNICATION UNIT |
| 200 | VESSEL |
| 300 | NETWORK |
| 400 | SERVER DEVICE |
| 500 | DRAFT DATA COLLECTION SYSTEM |

**Claims**

1. A draft meter to be used for a vessel in which a plurality of seal rings are arranged around a propeller shaft at intervals in an axial direction of the propeller shaft, an air chamber and an oil chamber in this order from a stern side are provided by the plurality of seal rings, and an air control unit is connected to the air chamber via an air supply channel, and having a pressure gauge for measuring pressure in the air chamber, the draft meter comprising:

   a data storage unit and an arithmetic unit,
   wherein the data storage unit is configured such that predetermined correction data and predetermined seawater density data are stored and that pressure data measured by the pressure gauge is received, and
   wherein the arithmetic unit is configured to identify a draft of the vessel by calculating a difference value between the pressure data and the correction data and by dividing the difference value by the seawater density data.

2. The draft meter according to claim 1, wherein the identified draft is accumulated as draft data at a freely-selected timing in the data storage unit.

3. The draft meter according to claim 1 or claim 2 wherein the correction data is a sum value of a value of tensional force by a seal ring of the plurality of seal rings and a value of channel resistance between the propeller shaft and the seal ring.

4. The draft meter according to any one of claims 1 to 3 the draft meter further comprising a display unit, wherein the draft of the vessel that is calculated is displayed on the display unit.

5. The draft meter according to claims 2 or claim 3 or claim 4 that depend from claim 2, further comprising a communication unit, wherein the draft data stored in the data storage unit is transmitted, via the communication unit, to a server device that collects the draft data.

6. A vessel in which a plurality of seal rings are arranged around a propeller shaft at intervals in an axial direction of the propeller shaft, an air chamber and an oil chamber in this order from a stern side are provided by the plurality of seal rings, an air control unit is connected to the air chamber via an air supply channel, and a pressure gauge is provided to measure pressure in the air chamber, the vessel comprising:

   a draft meter that comprises a data storage unit and an arithmetic unit,
   wherein the data storage unit is configured such that predetermined correction data and predetermined seawater density data are stored and that pressure data measured by the pressure gauge is received, and
   wherein the arithmetic unit is configured to identify a draft of the vessel by calculating a difference value between the pressure data and the correction data and by dividing the difference value by the seawater density data.

7. The vessel according to claim 6, wherein the identified draft is accumulated as draft data at a freely-selected timing in the data storage unit.

8. The vessel according to claim 6 or claim 7, wherein the correction data is a sum value of a value of tensional force by a seal ring of the plurality of seal rings and a value of channel resistance between the propeller shaft and the seal ring.

9. The vessel according to any one of claims 6 and 8, further comprising:

    an oil tank unit having an oil tank, the oil tank unit being connected to the oil chamber,
    wherein the air control unit is configured to control pressure of the air chamber by providing compressed air at a constant flow rate to the air chamber and by adjusting the flow rate of the compressed air in response to fluctuations in seawater pressure while executing control to pressurize the oil tank so as to maintain an oil pressure of the oil chamber that is higher than the pressure of the air chamber by a constant pressure difference.

**Patentansprüche**

1. Tiefgangmesser zur Verwendung für ein Schiff, in dem eine Vielzahl von Dichtungsringen um eine Propellerwelle in Abständen in einer axialen Richtung der Propellerwelle angeordnet sind, eine Luftkammer und eine Ölkammer in dieser Reihenfolge von einer Heckseite aus durch die Vielzahl von Dichtungsringen bereitgestellt sind und eine Luftsteuereinheit mit der Luftkammer über einen Luftzufuhrkanal verbunden ist, und mit einem Druckmesser zum Messen des Drucks in der Luftkammer, wobei der Tiefgangmesser umfasst:

    eine Datenspeichereinheit und eine Recheneinheit,
    wobei die Datenspeichereinheit derart eingerichtet ist, dass vorbestimmte Korrekturdaten und vorbestimmte Meerwasserdichtedaten gespeichert werden und dass von dem Druckmesser gemessene Druckdaten empfangen werden, und
    wobei die Recheneinheit dazu eingerichtet ist, einen Tiefgang des Schiffes durch Berechnen eines Differenzwertes zwischen den Druckdaten und den Korrekturdaten und durch Dividieren des Differenzwertes durch die Meerwasserdichtedaten zu identifizieren.

2. Tiefgangmesser nach Anspruch 1, wobei der identifizierte Tiefgang als Tiefgangdaten zu einem frei gewählten Zeitpunkt in der Datenspeichereinheit akkumuliert wird.

3. Tiefgangmesser nach Anspruch 1 oder Anspruch 2, wobei die Korrekturdaten ein Summenwert eines Wertes der Spannkraft durch einen Dichtungsring aus der Vielzahl der Dichtungsringe und eines Wertes des Kanalwiderstandes zwischen der Propellerwelle und dem Dichtungsring sind.

4. Tiefgangmesser nach einem der Ansprüche 1 bis 3, wobei der Tiefgangmesser ferner eine Anzeigeeinheit umfasst und der berechnete Tiefgang des Schiffes auf der Anzeigeeinheit angezeigt wird.

5. Tiefgangmesser nach Anspruch 2 oder Anspruch 3 oder Anspruch 4, die von Anspruch 2 abhängen, ferner umfassend eine Kommunikationseinheit, wobei die in der Datenspeichereinheit gespeicherten Tiefgangdaten über die Kommunikationseinheit an eine Servervorrichtung, die die Tiefgangdaten sammelt, übertragen werden.

6. Schiff, in dem eine Vielzahl von Dichtungsringen um eine Propellerwelle in Abständen in einer axialen Richtung der Propellerwelle angeordnet sind, eine Luftkammer und eine Ölkammer in dieser Reihenfolge von einer Heckseite aus durch die Vielzahl von Dichtungsringen bereitgestellt werden, eine Luftsteuereinheit mit der Luftkammer über einen Luftzufuhrkanal verbunden ist und ein Druckmesser bereitgestellt ist, um den Druck in der Luftkammer zu messen, wobei das Schiff umfasst:

    einen Tiefgangmesser, der eine Datenspeichereinheit und eine Recheneinheit umfasst,
    wobei die Datenspeichereinheit derart eingerichtet ist, dass vorbestimmte Korrekturdaten und vorbestimmte Meerwasserdichtedaten gespeichert werden und dass von dem Druckmesser gemessene Druckdaten empfangen werden, und
    wobei die Recheneinheit dazu eingerichtet ist, einen Tiefgang des Schiffes durch Berechnen eines Differenzwertes zwischen den Druckdaten und den Korrekturdaten und durch Dividieren des Differenzwertes durch die Meerwasserdichtedaten zu identifizieren.

7. Schiff nach Anspruch 6, wobei der identifizierte Tiefgang als Tiefgangdaten zu einem frei gewählten Zeitpunkt in der Datenspeichereinheit akkumuliert wird.

8. Schiff nach Anspruch 6 oder 7, wobei die Korrekturdaten ein Summenwert eines Wertes der Spannkraft durch einen Dichtungsring aus der Vielzahl der Dichtungsringe und eines Wertes des Kanalwiderstandes zwischen der Propellerwelle und dem Dichtungsring sind.

9. Schiff nach einem der Ansprüche 6 und 8, ferner umfassend:

eine Öltankeinheit mit einem Öltank, wobei die Öltankeinheit mit der Ölkammer verbunden ist, wobei die Luftsteuereinheit dazu eingerichtet ist, den Druck der Luftkammer zu steuern, indem der Luftkammer Druckluft mit einer konstanten Durchflussrate zugeführt wird und die Durchflussrate der Druckluft als Reaktion auf Schwankungen des Meerwasserdrucks angepasst wird, während eine Steuerung zur Druckbeaufschlagung des Öltanks ausgeführt wird, um einen Öldruck der Ölkammer aufrechtzuerhalten, der um eine konstante Druckdifferenz höher ist als der Druck der Luftkammer.

**Revendications**

1. Appareil de mesure de tirant d'eau destiné à être utilisé pour un navire dans lequel une pluralité de bagues d'étanchéité sont agencées autour d'un arbre porte-hélice à intervalles dans une direction axiale de l'arbre porte-hélice, une chambre d'air et une chambre d'huile dans cet ordre à partir d'un côté poupe sont ménagées par la pluralité de bagues d'étanchéité, et une unité de commande d'air est reliée à la chambre d'air via un canal d'alimentation en air, et ayant un manomètre pour mesurer la pression dans la chambre d'air, l'appareil de mesure de tirant d'eau comprenant :

une unité de stockage de données et une unité arithmétique, dans lequel l'unité de stockage de données est configurée de sorte qu'une donnée de correction prédéterminée et une donnée de densité d'eau de mer prédéterminée soient stockées et qu'une donnée de pression mesurée par le manomètre soit reçue, et dans lequel l'unité arithmétique est configurée pour identifier un tirant d'eau du navire par le calcul d'une valeur de différence entre la donnée de pression et la donnée de correction et par la division de la valeur de différence par la donnée de densité d'eau de mer.

2. Appareil de mesure de tirant d'eau selon la revendication 1, dans lequel le tirant d'eau identifié est accumulé sous la forme d'une donnée de tirant d'eau à une temporisation librement sélectionnée dans l'unité de stockage de données.

3. Appareil de mesure de tirant d'eau selon la revendication 1 ou la revendication 2 dans lequel la donnée de correction est une valeur de somme d'une valeur de force de tension par une bague d'étanchéité de la pluralité de bagues d'étanchéité et d'une valeur de résistance de canal entre l'arbre porte-hélice et la bague d'étanchéité.

4. Appareil de mesure de tirant d'eau selon l'une quelconque des revendications 1 à 3, l'appareil de mesure de tirant d'eau comprenant en outre une unité d'affichage, dans lequel le tirant d'eau du navire qui est calculé est affiché sur l'unité d'affichage.

5. Appareil de mesure de tirant d'eau selon la revendication 2, ou la revendication 3 ou la revendication 4 qui dépendent de la revendication 2, comprenant en outre une unité de communication, dans lequel la donnée de tirant d'eau stockée dans l'unité de stockage de données est émise, via l'unité de communication, vers un dispositif serveur qui collecte la donnée de tirant d'eau.

6. Navire dans lequel une pluralité de bagues d'étanchéité sont agencées autour d'un arbre porte-hélice à intervalles dans une direction axiale de l'arbre porte-hélice, une chambre d'air et une chambre d'huile dans cet ordre à partir d'un côté poupe sont ménagées par la pluralité de bagues d'étanchéité, une unité de commande d'air est reliée à la chambre d'air via un canal d'alimentation en air, et un manomètre est ménagé pour mesurer la pression dans la chambre d'air, le navire comprenant :

un appareil de mesure de tirant d'eau qui comprend une unité de stockage de données et une unité arithmétique, dans lequel l'unité de stockage de données est configurée de sorte qu'une donnée de correction prédéterminée et une donnée de densité d'eau de mer prédéterminée soient stockées et qu'une donnée de pression mesurée par le manomètre soit reçue, et dans lequel l'unité arithmétique est configurée pour identifier un tirant d'eau du navire par le calcul d'une valeur de différence entre la donnée de pression et la donnée de correction et par la division de la valeur de différence

EP 3 854 674 B1

par la donnée de densité d'eau de mer.

7.  Navire selon la revendication 6, dans lequel le tirant d'eau identifié est accumulé sous la forme d'une donnée de tirant d'eau à une temporisation librement sélectionnée dans l'unité de stockage de données.

8.  Navire selon la revendication 6 ou la revendication 7, dans lequel la donnée de correction est une valeur de somme d'une valeur de force de tension par une bague d'étanchéité de la pluralité de bagues d'étanchéité et d'une valeur de résistance de canal entre l'arbre porte-hélice et la bague d'étanchéité.

9.  Navire selon l'une quelconque des revendications 6 et 8, comprenant en outre :

une unité de réservoir d'huile ayant un réservoir d'huile, l'unité de réservoir d'huile étant reliée à la chambre d'huile,
dans lequel l'unité de commande d'air est configurée pour commander la pression de la chambre d'air par la fourniture d'air comprimé à un débit constant à la chambre d'air et par l'ajustement du débit de l'air comprimé en réponse à des fluctuations de la pression d'eau de mer tout en exécutant une commande pour mettre sous pression le réservoir d'huile de façon à maintenir une pression d'huile de la chambre d'huile qui est supérieure à la pression de la chambre d'air d'une différence de pression constante.

FIG.1

STERN SIDE

BOW SIDE

EP 3 854 674 B1

# FIG.2

STERN SIDE

BOW SIDE

# FIG.3

SEAWATER

Pw

9A    20A

9c    P3

h    Q    51    C    Y1 Y2    34

4

34b    P2

P1

34a

30

OPERATING PRESSURE

38

EP 3 854 674 B1

# FIG.4

EP 3 854 674 B1

| | WHEN DRAFT INCREASES | | WHEN DRAFT DECREASES | |
|---|---|---|---|---|
| | $P3 = Pw + \alpha$ (CONSTANT VALUE) | | | |
| LOAD ACTING ON SEAL RING | ↓ ⊕ | ↑ ⊖ | ↓ ⊖ | ↑ ⊕ |
| GAP h | ↓ ⊖ | ↑ ⊕ | ↓ ⊕ | ↑ ⊖ |
| AIR FLOW RATE Q | ↓ ⊖ | ↑ ⊕ | ↓ ⊕ | ↑ ⊖ |
| AIR CHAMBER PRESSURE P3 | ↓ ⊕ | ↑ | ↓ ⊖ | ↑ |
| FLOW CONTROLLER PRESSURE P2 | ↓ ⊕ | ↑ ⊖ | ↓ ⊖ | ↑ ⊕ |
| DIAPHRAGM GAP C | ⊕ | | ⊖ | |

⊕ : INCREASES

⊖ : DECREASES

# FIG.5

DRAFT METER 100

| CPU 102 | ROM 104 | RAM 106 | AUXILIARY STORAGE UNIT 108 |

114

DISPLAY UNIT 110

COMMUNICAITON UNIT 112

EP 3 854 674 B1

# FIG.6

~100

DRAFT METER

DATA COLLECTION UNIT ~120

ARITHMETIC UNIT ~130

DATA STORAGE UNIT ~140

# FIG.7

| SEAL RING TYPE NO. | SEAL RING CROSS-SECTIONAL SHAPE | ANNULAR SPRING TYPE | SEAL RING DIAMETER | | CORRECTION DATA $\alpha$ |
|---|---|---|---|---|---|
| 1 | X1 | S1 | $\phi 1$ | | $\alpha 1$ |
| 2 | X2 | S2 | $\phi 2$ | | $\alpha 2$ |
| N | XN | SN | $\phi N$ | | $\alpha N$ |

EP 3 854 674 B1

# FIG.8

VESSEL ~200

VESSEL ~200

VESSEL ~200

DRAFT DATA

300

DRAFT DATA

500

SERVER DEVICE ~400

DATA COLLECTION UNIT ~402

DATA ANALYSIS UNIT ~404

DATA STORAGE UNIT ~406

EP 3 854 674 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5683278 A

- JP 2014196067 A